# EUROPÄISCHE PATENTANMELDUNG

(11) **EP 4 390 501 A1**
(43) Veröffentlichungstag der Anmeldung: **26.06.2024**
(21) Anmeldenummer: 23218186.7
(22) Anmeldetag: 19.12.2023
(51) Int. Cl.: G02B 26/10, G02B 27/00, G02B 27/01, G02B 27/09, G02B 27/42, G02B 27/10, G02B 27/30

(54) **VORRICHTUNG ZUR ERZEUGUNG UND DARSTELLUNG EINES BILDES AUF EINEM BEOBACHTUNGSFELD UNTER VERWENDUNG EINES DIFFRAKTIV BEEINFLUSSTEN WELLENLEITERS**

(30) Priorität: 21.12.2022 DE 102022134417
(71) Anmelder: OQmented GmbH, 25524 Itzehoe (DE)
(72) Erfinder: FRANZ, Stefan, 07751 Jena (DE)
(74) Vertreter: Gleim Petri Patent- und Rechtsanwaltspartnerschaft mbB

(57) **Zusammenfassung**

Die Erfindung betrifft eine Vorrichtung zur Erzeugung und Darstellung eines Bildes auf einem zur Einblendung von Informationen und Bildern vorgesehenen Beobachtungsfeld (1), umfassend mindestens eine Lichtquelle (2) zum Aussenden mindestens eines divergenten Lichtbündels (3), einen Mikroscanner (4) zur variablen Ablenkung des mindestens einen Lichtbündels (3) in Richtung des Beobachtungsfelds (1), mindestens einen Wellenleiter (7), der in einem zwischen der mindestens einen Lichtquelle (2) und dem Mikroscanner (4) vorhandenen Strahlengang des mindestens einen Lichtbündels (3) angeordnet ist, und mindestens ein diffraktives Element (5) zur Kollimation des mindestens einen Lichtbündels (3), wobei der Mikroscanner (4) mindestens eine Drehachse für eine rotatorische Schwingungsbewegung zur Ablenkung des mindestens einen Lichtbündels (3) aufweist, und das mindestens eine diffraktive Element (5) auf oder in dem mindestens einen Wellenleiter (7) angebracht ist.

## Beschreibung

Die Erfindung betrifft eine Projektionsvorrichtung zur Erzeugung und Darstellung eines Bildes auf einem zur Projektion erweiterter Realität vorgesehenen Beobachtungsfeld, welches insbesondere ein Brillenglas oder eine Netzhaut eines Benutzers einer Augmented-Reality-Brille sein kann.

Erweiterte Realität (engl.: Augmented Reality, kurz AR) bezeichnet die computergestützte Erweiterung der Realitätswahrnehmung, die mindestens eine der menschlichen Sinnesmodalitäten anspricht. Häufig wird unter AR jedoch nur die visuelle Darstellung von Informationen verstanden, nämlich die Ergänzung von Bildern oder Videos mit computergenerierten Zusatzinformationen und/oder virtuellen Objekten mittels Einblendung bzw. Überlagerung. Insbesondere die visuelle Darstellung bzw. Projektion von Bildern, Benutzeroberflächen oder Informationen, wie Wegbeschreibungen, Wetterinformationen oder Nachrichten, stellt eine häufige Anwendung von AR dar und findet zunehmend Anwendung in sogenannten AR-Brillen, die Bilder, Benutzeroberflächen oder Informationen direkt auf den Brillengläsern oder der Netzhaut eines Benutzers darstellen können.

Zur Projektion von Bildern oder Textinformationen kann ein Mikroscanner (auch mikro-elektro-mechanisches System, kurz: MEMS) verwendet werden. Auf den MEMS-Scanner wird ein Lichtbündel, der von einer beispielsweise in einem Bügel einer Brille angeordneten Lichtquelle erzeugt und anschließend geformt wird, abgelenkt. Durch den MEMS-Scanner kann das Lichtbündel dann gescannt werden, wodurch auf einem Beobachtungsfeld ein Bild erzeugt wird. Ein solches bildgebendes System mit MEMS-Scanner benötigt vergleichsweise wenig optische Elemente, wodurch kleine und kostengünstige Projektoren realisiert werden können. Für AR-Anwendungen muss ein Projektor eine sehr gute optische Auflösung erzielen und sehr wenig Strom verbrauchen. Aufgrund mangelnder Alternativen werden daher häufig Kantenemitter als Lichtquelle verwendet. Diese emittieren jedoch ein stark divergentes, elliptisch geformtes Lichtbündel, das kollimiert werden muss.

Ein MEMS-Scanner ist beispielsweise in der DE 10 2021 116 151 B3 beschrieben. Der dort offenbarte MEMS-Scanner kann um zwei resonante Schwingungsachsen simultan rotatorische Oszillationen ausführen, um durch Ablenken eines während der Oszillationen auf ein Ablenkelement einfallenden Lichtstrahls eine nichtlineare Lissajous-Projektion in ein Beobachtungsfeld zu bewirken.

Durch die Oszillationen wird ein Sichtfeld (engl.: Field of View, kurz: FOV) mit hohen Frequenzen in einem Scan-Muster, das einer Lissajous-Figur gleicht, gescannt. Im Gegensatz zu konventionellen Rasterscanverfahren, die das FOV periodisch von oben nach unten mit maximaler Auflösung scannen, können so hunderte Teilbilder gleichzeitig verarbeitet und eine flüssigere Bewegungsdarstellung ermöglicht werden. Außerdem werden Artefakte bei der dreidimensionalen Wahrnehmung von sich schnell bewegenden Objekten stark reduziert.

Das Scannen eines von einer Laserdiode emittierten Lichtbündels über ein Beobachtungsfeld wird auch als Laser Beam Scanning (kurz: LBS) bezeichnet.

Ein Display für eine augennahe Anzeige von Abbildungen ist durch die WO 2021/122948 A1 offenbart. Das Display umfasst eine Lichtquelle zum emittieren von Licht in Richtung eines Wellenleiters, den Wellenleiter sowie ein erstes optisches Element, das auf dem Wellenleiter vorgesehen und so konfiguriert ist, dass es Licht empfängt und in den Wellenleiter einkoppelt. Zum Anzeigen der Abbildungen kann LBS eingesetzt werden.

Zur Strahlformung sowie zur Kollimation ist aus der DE 10 2017 211 932 A1 eine Datenbrille und eine Projektionsvorrichtung für eine Datenbrille sowie ein Verfahren zum Betreiben der Projektionsvorrichtung bekannt. Die offenbarte Projektionsvorrichtung weist eine Lichtquelle zum Aussenden mindestens eines Lichtstrahls, ein Umlenkelement zum Projizieren eines Bildes auf eine Netzhaut eines Nutzers, ein Reflexionselement zum Reflektieren des Lichtstrahls auf das Umlenkelement sowie ein adaptives optisches Element zur anpassenden Veränderung mindestens eines Strahlparameters auf. Die Projektionsvorrichtung kann, falls notwendig, auch Kollimationselemente des Lichtstrahls aufweisen.

Eine weitere in der DE 10 2019 219 520 A1 offenbarte Bilderzeugungs- und Bilddarstellungsvorrichtung umfasst eine Lichtquelle, ein Umlenkelement und eine zwischen der Lichtquelle und dem Umlenkelement angeordnete Linsenanordnung, wobei die Linsenanordnung zwei Zylinderlinsen enthält, mit denen unterschiedliche Strahlprofile in zwei Achsen erzeugt werden können. Durch die Zylinderlinsen kann ein von der Lichtquelle ausgesandter Lichtstrahl kollimiert und geformt werden.

Aus der DE 10 2018 201 525 A1 ist eine weitere Projektionsvorrichtung für eine Datenbrille bekannt, die eine Lichtquelle zum Aussenden eines Lichtstrahls, mindestens ein Umlenkelement zum Projizieren eines Bildes auf einer Netzhaut eines Nutzers sowie ein Reflexionselement zum Reflektieren des Lichtstrahls auf ein erstes Umlenkelement aufweist. Darüber hinaus weist die Projektionsvorrichtung einen Lichtleiter zwischen der Lichtquelle und dem Reflexionselement auf. Der Lichtleiter dient dazu, das von der Lichtquelle ausgesandte Licht zu einem Umlenkelement zu leiten. Darüber hinaus wird durch den Lichtleiter die Bildqualität verbessert, da Moden, die nicht einer Grundmode des Lichtleiters entsprechen, beim Einkoppeln des Lichtstrahls aus dem Lichtstrahl gefiltert werden, sodass weniger Störlicht in den Strahlengang des Lichtstrahls gelangt.

Bei den beschriebenen Projektionsvorrichtungen ist stets ein separates optisches Element zur Kollimation des von einer Lichtquelle emittierten Lichtbündels vorgesehen. Da der Bauraum bei einer AR-Brille beschränkt ist und Designaspekte bei AR-Brillen eine große Rolle spielen, ist es nachteilig, viele optische Elemente mit relativ großen Weglängen der Lichtbündel, wie beispielsweise Teleskopanordnungen mit mehreren Linsen, in eine AR-Brille zu integrieren. Zudem beeinflusst die Anzahl der Bauteile bei der Montage der Projektionsvorrichtung auch nachteilig den Justageaufwand, der mit steigender Anzahl der Bauteile zunimmt.

Die Aufgabe der Erfindung ist es daher, eine neue Möglichkeit zur Bilderzeugung und Bilddarstellung auf einem Beobachtungsfeld zur AR-Informationsprojektion zu finden, die bei hoher optischer Auflösung und geringem Stromverbrauch wenige optische Elemente und wenig Bauraum beansprucht.

Die Aufgabe wird durch eine Vorrichtung zur Erzeugung und Darstellung eines Bildes auf einem zur Einblendung von Informationen und Bildern vorgesehenen Beobachtungsfeld, umfassend mindestens eine Lichtquelle zum Aussenden mindestens eines divergenten Lichtbündels, einen Mikroscanner zur variablen Ablenkung des mindestens einen Lichtbündels in Richtung des Beobachtungsfelds, mindestens einen Wellenleiter, der in einem zwischen der mindestens einen Lichtquelle und dem Mikroscanner vorhandenen Strahlengang des mindestens einen Lichtbündels angeordnet ist, und mindestens ein diffraktives Element zur Kollimation des mindestens einen Lichtbündels, wobei der Mikroscanner mindestens eine Drehachse für eine rotatorische Schwingbewegung zur Ablenkung des mindestens einen Lichtbündels aufweist, und das mindestens eine diffraktive Element auf oder in dem Wellenleiter angebracht ist, gelöst.

Die Erzeugung und Darstellung eines Bildes ist im Sinne der Erfindung als die Erzeugung und Darstellung von einem Bild, mehreren Bildern oder einer Abfolge von Bildern zu verstehen. Mit einer erfindungsgemäßen Vorrichtung können auch Benutzeroberflächen oder Informationen, wie Wegbeschreibungen, Wetterinformationen oder Nachrichten auf dem Beobachtungsfeld dargestellt werden.

Das Beobachtungsfeld ist vorteilhaft mindestens eine optisch wirksame Fläche, beispielsweise mindestens ein Strahlteiler oder ein holographisches optisches Element (engl.: Holographie Optical Element, kurz: HOE), das in einem Brillenglas einer AR-Brille oder auf einer Frontscheibe eines Kraftfahrzeugs aufgebracht ist. Alternativ ist das Beobachtungsfeld mindestens eine Netzhaut eines Nutzers.

Das mindestens eine diffraktive Element ist ein optisches Element, auf dem Mikrostrukturen aufgebracht sind. An den diffraktiven Elementen kann sowohl eine Phase des mindestens einen Lichtbündels als auch ein Intensitätsmuster des Lichtbündels moduliert werden. Die Modulation erfolgt durch Beugung des mindestens einen Lichtbündels an dem diffraktiven Element. Dadurch kann das mindestens eine Lichtbündel kollimiert, abgelenkt, geformt und/oder geteilt werden sowie Astigmatismen des mindestens einen Lichtbündels beeinflusst, bevorzugt entfernt, werden.

Der Wellenleiter ist im Wesentlichen plattenförmig und besteht aus einem Material, durch das das von der Lichtquelle emittierte mindestens eine Lichtbündel propagieren kann. Das Lichtbündel propagiert bevorzugt durch Totalreflektion an den Außenseiten des Wellenleiters durch das Lichtbündel. Dazu muss das Lichtbündel unter einem Winkel, der größer als ein Winkel der Totalreflexion ist, in den Wellenleiter eingekoppelt werden. Der Winkel der Totalreflexion hängt von dem Material ab, aus dem der Wellenleiter besteht. Der Wellenleiter kann aus mehreren Schichten bestehen oder aus nur einer Schicht bestehen. Bevorzugt ist der Wellenleiter eine Platte aus Glas. Besonders bevorzugt ist der Wellenleiter ein Brillenglas einer Augmented-Reality-Brille oder die Frontscheibe eines Kraftfahrzeugs.

Durch das Anbringen des mindestens einen diffraktiven Elements auf oder in dem Wellenleiter wird der für die Vorrichtung zur Erzeugung und Darstellung eines Bildes auf einem zur Einblendung von Informationen und Bildern vorgesehenen Beobachtungsfeld benötigte Bauraum beträchtlich reduziert, da keine zusätzlichen optischen Elemente für die Kollimation, Ablenkung, Formung, Beeinflussung von Astigmatismen und/oder Teilung benötigt werden.

Auf dem Wellenleiter, insbesondere auf Außenseiten des Wellenleiters, an denen mindestens ein diffraktives Element aufgebracht ist, kann zudem ein Deckglas aufgebracht sein, das die Außenseite des Wellenleiters und/oder das mindestens eine diffraktive Element vor äußeren Einflüssen schützt. Besonders bevorzugt ist auf beiden Außenseiten des Wellenleiters ein Deckglas aufgebracht.

Vorteilhaft ist das mindestens eine diffraktive Element als optisches Gitter ausgebildet. Die diffraktiven Elemente können vorteilhaft als Amplitudengitter und/oder als Phasengitter, insbesondere als Blazegitter, ausgebildet sein. Des Weiteren können als diffraktive Elemente beispielsweise auch sogenannte Schrägkantengitter (engl. slanted edge grating), Zonenplatten und/oder holographische Gitter (HOE) eingesetzt sein. Optische Gitter können entweder auf eine Oberfläche des Wellenleiters aufgebracht oder direkt in das diffraktive Element eingebracht werden, wodurch Kosten und Aufwand bei der Produktion der Vorrichtung zur Erzeugung und Darstellung eines Bildes auf einem Beobachtungsfeld gering bleiben oder sinken, da keine zusätzlichen optischen Elemente im Strahlengang des mindestens einen Lichtbündels notwendig sind.

Das mindestens eine diffraktive Element kann zur Formung eines Strahlquerschnitts des mindestens einen Lichtbündels ausgelegt sein, um eine Elliptizität des mindestens einen Lichtbündels zu reduzieren. Die Elliptizität des mindestens einen Lichtbündels zu reduzieren ist insbesondere zum Erzielen einer sehr guten optischen Auflösung notwendig, da durch Lichtbündel mit einem elliptischen Strahlquerschnitt zusätzliche Abbildungsfehler erzeugt werden können.

Das mindestens eine diffraktive Element kann zur Beeinflussung von Astigmatismen des mindestens einen Lichtbündels ausgelegt sein. Insbesondere das Entfernen von Astigmatismen des mindestens einen Lichtbündels ist zum Verbessern der optischen Auflösung sinnvoll.

Das mindestens eine diffraktive Element soll vorteilhaft anamorphotisch wirken und das von der Lichtquelle emittierte divergente Strahlbündel kollimieren sowie entzerren, also Astigmatismen entfernen und eine Elliptizität des Strahlquerschnitts reduzieren.

Zur Kollimation, optional zur Ablenkung, zur Beeinflussung von Astigmatismen und zum Formen des Strahlquerschnitts des mindestens einen Lichtbündels können entweder mehrere diffraktive Elemente, die jeweils eine oder mehrere der Funktionen aufweisen oder ein einziges diffraktives Element, das alle Funktionen aufweist, zwischen der Lichtquelle und dem Mikroscanner auf oder in dem Wellenleiter angebracht sein. Zwischen der mindestens einen Lichtquelle und dem Mikroscanner kann beispielsweise ein diffraktives Element zur Kollimation des mindestens einen Lichtbündels sowie mindestens ein weiteres diffraktives Element zur Formung und Ablenkung des mindestens einen Lichtbündels angeordnet sein.

Dem mindestens einen diffraktiven Element vorgeordnet ist im Strahlengang des mindestens einen Lichtbündels bevorzugt ein zusätzliches optisches Element vorhanden, das dazu ausgelegt ist eine Divergenz des mindestens einen Lichtbündels zu reduzieren. Dadurch können die Anforderungen an das mindestens eine diffraktive Element gesenkt werden. Das zusätzliche optische Element kann diffraktiv oder refraktiv ausgelegt sein. Es kann entweder direkt an der Lichtquelle angebracht sein oder zwischen der Lichtquelle und dem diffraktiven Element im Strahlengang des mindestens einen Lichtbündels angeordnet sein.

Mindestens eines der auf dem Wellenleiter aufgebrachten diffraktiven Elemente kann bevorzugt als Ein- oder Auskoppelelement ausgelegt sein, durch das das mindestens eine Lichtbündel in den Wellenleiter eingekoppelt oder ausgekoppelt werden kann. An dem Wellenleiter können ein oder mehrere Ein- und Auskoppelelemente vorhanden sein. Die Ein- und Auskoppelelemente können auch als refraktive optische Elemente ausgelegt sein.

Vorteilhaft ist die mindestens eine Lichtquelle als Kantenemitter, Oberflächenemitter oder als fasergekoppelte Laserlichtquelle ausgebildet. Oberflächenemitter und fasergekoppelte Lichtquellen haben den Vorteil, dass die von diesen Lichtquellen emittierten Lichtbündel in der Regel weniger divergent als die von Kantenemittern emittierten Lichtbündel sind. Dafür sind die Anschaffungskosten von Oberflächenemittern und fasergekoppelten Lichtquellen in der Regel höher als die von Kantenemittern. Besonders vorteilhaft kann eine Laserdiode oder ein fasergekoppelter Laser als Lichtquelle eingesetzt sein.

Die mindestens eine Lichtquelle kann dazu ausgebildet sein, mehrere Lichtbündel mit paarweise voneinander verschiedenen spektralen Zusammensetzungen zu emittieren.

Alternativ kann die mindestens eine Lichtquelle dazu ausgebildet sein, mehrere Lichtbündel mit derselben spektralen Zusammensetzung zu emittieren. Die Lichtquelle kann dazu mehrere Einzellichtquellen aufweisen, die in einem vorgegebenen Abstand zueinander liegen. Durch ein diffraktives Element kann vorzugsweise der Abstand der von den Einzellichtquellen emittierten Lichtbündel zueinander eingestellt werden. Das Verwenden einer Zeilenlichtquelle ist insbesondere dann sinnvoll, wenn der Mikroscanner um nur eine Drehachse drehbar ausgebildet ist, da dann durch ein gleichzeitiges Ansteuern von Zeilenlichtquelle und Mikroscanner ein Bild in zwei Dimensionen erzeugt werden kann.

Zwischen der mindestens einen Lichtquelle und dem Mikroscanner kann zudem ein diffraktives Element angeordnet sein, das dazu ausgelegt ist, die Lichtbündel mit paarweise voneinander verschiedenen spektralen Zusammensetzungen oder mit derselben spektralen Zusammensetzung, die unter paarweise verschiedenen Winkeln auf das diffraktive Element fallen, zu einem einzigen Lichtbündel vereinigen.

Der Mikroscanner kann insbesondere als mikro-elektro-mechanisches System (MEMS) ausgebildet und dazu ausgelegt sein, eine nichtlineare Lissajous-Projektion in das Beobachtungsfeld zu bewirken. Der Mikroscanner ist so ausgebildet, um das Lichtbündel über das Beobachtungsfeld zu scannen, wodurch auf dem Beobachtungsfeld ein Bild erzeugt wird. Durch das Scannen des mindestens einen Lichtbündels entlang einer Lissajous-Figur können hunderte Teilbilder gleichzeitig verarbeitet werden und eine flüssigere Bewegungsdarstellung ermöglicht werden. Außerdem werden Artefakte bei der dreidimensionalen Wahrnehmung von sich schnell bewegenden Objekten durch den Nutzer stark reduziert.

Besonders vorteilhaft ist der Mikroscanner um genau zwei Drehachsen, die orthogonal zueinander sind, drehbar ausgebildet und oszilliert mit seiner Eigenfrequenz um die beiden Drehachsen. Der Mikroscanner kann auch nur um eine Drehachse drehbar ausgebildet sein und die Lichtquelle ist dazu ausgebildet mehrere nebeneinander angeordnete Lichtbündel zeilenartig zu emittieren.

Die Aufgabe wird weiterhin durch eine Augmented-Reality-Brille, enthaltend eine Vorrichtung zur Erzeugung und Darstellung von Bildern gemäß einer der beschriebenen Ausführungen, gelöst.

Die Erfindung soll nachfolgend durch Ausführungsbeispiele anhand von Zeichnungen näher beschrieben werden. Hierzu zeigen:
- Fig. 1a: Eine Ansicht einer ersten Ausführung einer Vorrichtung zur Erzeugung und Darstellung eines Bildes auf einem Beobachtungsfeld mit einer Lichtquelle, einem diffraktiven Element aufgebracht auf einem Wellenleiter, und einem Mikroscanner sowie einen Strahlengang eines Lichtbündels,
- Fig. 1b: eine Seitenansicht einer zweiten Ausführung der Vorrichtung zur Erzeugung und Darstellung eines Bildes auf dem Beobachtungsfeld mit der Lichtquelle, dem diffraktiven Element aufgebracht auf dem Wellenleiter, und dem Mikroscanner sowie den Strahlengang des Lichtbündels,
- Fig. 2: eine Seitenansicht einer dritten Ausführung der Vorrichtung zur Erzeugung und Darstellung eines Bildes auf dem Beobachtungsfeld mit der Lichtquelle, dem diffraktiven Element aufgebracht auf dem Wellenleiter, und dem Mikroscanner sowie den Strahlengang des Lichtbündels,
- Fig. 3: eine Ansicht einer vierten Ausführung der Vorrichtung zur Erzeugung und Darstellung eines Bildes auf dem Beobachtungsfeld mit der Lichtquelle, zwei diffraktiven Elementen aufgebracht auf entgegengesetzten Außenseiten des Wellenleiters, und dem Mikroscanner sowie den Strahlengang des Lichtbündels,
- Fig. 4: eine Seitenansicht einer fünften Ausführung der Vorrichtung zur Erzeugung und Darstellung eines Bildes auf dem Beobachtungsfeld mit der Lichtquelle, dem diffraktiven Element angebracht an dem Wellenleiter und dem Mikroscanner sowie den Strahlengang des Lichtbündels bis zu einem Auge eines Nutzers,
- Fig. 5a: eine Ansicht einer sechsten Ausführung der Vorrichtung zur Erzeugung und Darstellung eines Bildes auf dem Beobachtungsfeld mit der Lichtquelle, dem diffraktiven Element angebracht an dem Wellenleiter und dem Mikroscanner sowie den Strahlengang des Lichtbündels,
- Fig. 5b: eine Seitenansicht einer siebten Ausführung der Vorrichtung zur Erzeugung und Darstellung eines Bildes auf dem Beobachtungsfeld mit der Lichtquelle, dem diffraktiven Element angebracht an dem Wellenleiter, einem zusätzlichen optischen Element und dem Mikroscanner sowie den Strahlengang des Lichtbündels,
- Fig. 6: eine Seitenansicht einer achten Ausführung der Vorrichtung zur Erzeugung und Darstellung eines Bildes auf dem Beobachtungsfeld mit der Lichtquelle, dem diffraktiven Element angebracht an dem Wellenleiter, einem zusätzlichen optischen Element und dem Mikroscanner sowie den Strahlengang des Lichtbündels, und
- Fig. 7: eine Seitenansicht einer neunten Ausführung der Vorrichtung zur Erzeugung und Darstellung eines Bildes auf dem Beobachtungsfeld mit der Lichtquelle, dem diffraktiven Element angebracht an dem Wellenleiter, und dem Mikroscanner sowie den Strahlengang des Lichtbündels.

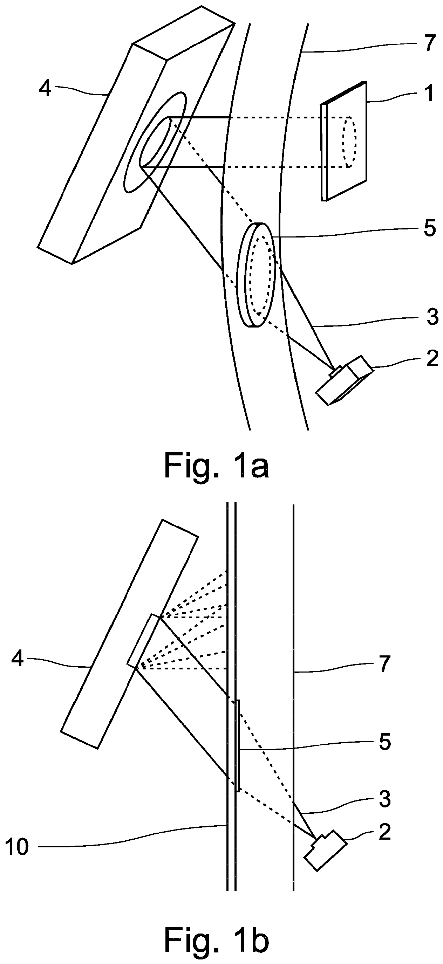

Eine erste Ausführung einer Vorrichtung zur Erzeugung und Darstellung eines Bildes auf einem Beobachtungsfeld 1 mit einer Lichtquelle 2, die ein divergentes Lichtbündel 3 emittiert, einem Mikroscanner 4 und einem diffraktiven Element 5 ist in **Fig. 1a** gezeigt. Das diffraktive Element 5 ist in einen Wellenleiter 7 eingebracht und kreisförmig. Die Lichtquelle 2 ist in dem ersten Ausführungsbeispiel als Flächenemitter ausgeführt und emittiert ein Lichtbündel 3, dessen Strahlquerschnitt kreisförmig ist. Dadurch werden keine zusätzlichen diffraktiven Elemente 5 zur Formung eines Strahlquerschnitts des Lichtbündels 3 benötigt. Das Lichtbündel 3 tritt schräg in den Wellenleiter 7 ein und trifft dort unter einem Winkel auf das diffraktive Element 5, welches im Strahlengang des Lichtbündels 3 zwischen der Lichtquelle 2 und dem Mikroscanner 4 angeordnet ist. Das Lichtbündel 3 wird durch das diffraktive Element 5 transmittiert und an dem diffraktiven Element 5 gebeugt. Durch die Beugung an dem diffraktiven Element 5 wird das Lichtbündel 3 kollimiert. Nach dem diffraktiven Element 5 tritt das Lichtbündel 3 aus dem Wellenleiter 7 aus und trifft auf den Mikroscanner 4. Der Mikroscanner 4 lenkt das Lichtbündel 3 ab, wodurch das Lichtbündel 3 über das Beobachtungsfeld 1 gescannt und auf einem Beobachtungsfeld 1 ein Bild erzeugt wird.

Das Beobachtungsfeld 1 ist bei dem ersten Ausführungsbeispiel eine optisch wirksame Fläche, beispielsweise ein Strahlteiler oder ein holographisches optisches Element (engl.: Holographic Optical Element, kurz: HOE), das in ein Brillenglas einer AR-Brille eingebracht ist.

Bei der in **Fig. 1b** gezeigten zweiten Ausführung einer Vorrichtung zur Erzeugung und Darstellung eines Bildes auf einem Beobachtungsfeld 1 ist im Gegensatz zu der in Fig. 1a gezeigten Ausführung das diffraktive Element 5 an der Außenseite des Wellenleiters 7 innerhalb des Wellenleiters 7 angebracht. Auch hier wird das Lichtbündel 3 durch Beugung an dem diffraktiven Element 5 kollimiert. Die Strahlengänge, die das Lichtbündel 3 nach der Ablenkung durch den Mikroscanner 4 nehmen kann, sind durch gestrichelte Linien angedeutet. Der Bereich in den der Mikroscanner 4 das Lichtbündel 3 ablenkt hängt von der Position des Beobachtungsfelds 1 ab.

Auf der dem Mikroscanner 4 zugewandten Außenseite des Wellenleiters 7 ist ein Deckglas 10 aufgebracht, um den Wellenleiter 7 und das diffraktive Element 5 vor äußeren Einflüssen zu schützen.

Der Wellenleiter 7 ist im Wesentlichen plattenförmig geformt. Eine Dicke des Wellenleiters 7 ist also wesentlich geringer als eine Breite des Wellenleiters 7. Der Wellenleiter 7 kann, wie in Fig. 1a gezeigt, gebogen sein oder, wie in Fig. 1b gezeigt, geradförmig verlaufende Außenseiten aufweisen.

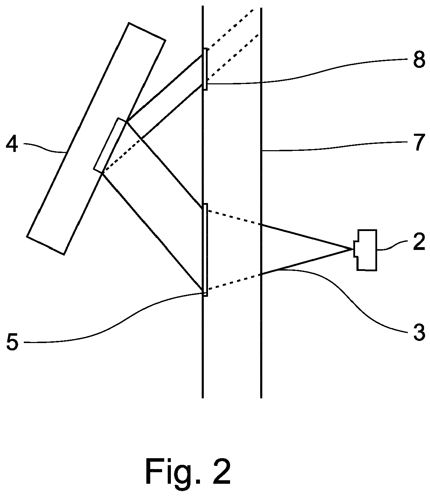

In **Fig. 2** ist eine dritte Ausführung der Vorrichtung zur Erzeugung und Darstellung eines Bildes auf dem Beobachtungsfeld 1 mit der Lichtquelle 2, dem diffraktiven Element 5, aufgebracht auf dem Wellenleiter 7 und dem Mikroscanner 4 sowie der Strahlengang des Lichtbündels 3 dargestellt. Das von der Lichtquelle 2 emittierte Lichtbündel 3 trifft hier senkrecht auf den Wellenleiter 7 und tritt in den Wellenleiter 7 ein, bevor es beim Austritt aus dem Wellenleiter 7 durch das diffraktive Element 5 in Richtung des Mikroscanners 4 abgelenkt und kollimiert wird. Von dem Mikroscanner 4 wird das Lichtbündel 3 in Richtung eines Einkoppelelements 8 abgelenkt. Das Einkoppelelement 8 ist dazu ausgelegt, das von dem Mikroscanner 4 kommende Lichtbündel 3 in den Wellenleiter 7 einzukoppeln.

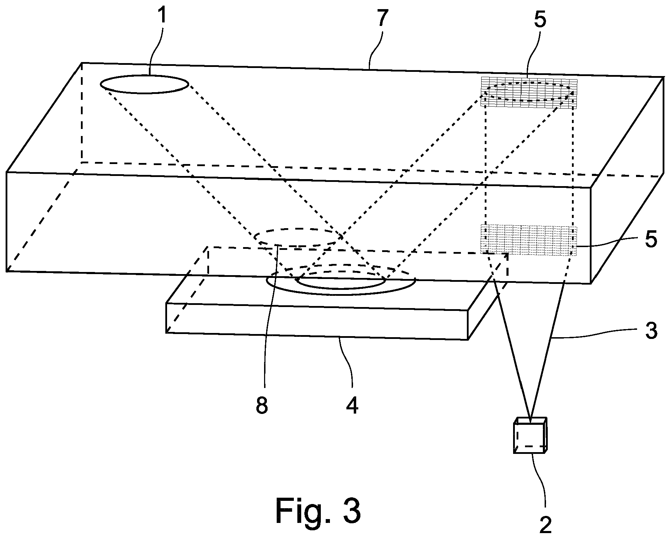

Eine vierte Ausführung der Vorrichtung zur Erzeugung und Darstellung des Bildes auf dem Beobachtungsfeld 1 mit der Lichtquelle 2, zwei diffraktiven Elementen 5 und dem Mikroscanner 4 sowie der Strahlengang des Lichtbündels 3 sind in **Fig. 3** dargestellt. Die diffraktiven Elemente 5 sind als Gitter ausgeführt. Die diffraktiven Elemente 5 sind an gegenüberliegenden Seiten des Wellenleiters 7 angebracht und das Lichtbündel 3 wird zunächst durch das an der Unterseite des Wellenleiters 7 angebrachte diffraktive Element 5 transmittiert und kollimiert. Anschließend trifft das Lichtbündel 3 auf das an der Oberseite des Wellenleiters 7 angebrachte diffraktive Element 5. Von dem an der Oberseite des Wellenleiters 7 angebrachten diffraktiven Element 5 wird das Lichtbündel 3 in Richtung des Mikroscanners 4 abgelenkt bzw. reflektiert. Der Mikroscanner 4 ist auf derselben Seite des Wellenleiters 7 wie die Lichtquelle 2 angeordnet und scannt das Lichtbündel 3 über das Beobachtungsfeld 1. An dem Wellenleiter 7 ist zudem das Einkoppelelement 8 vorhanden, um das von dem Mikroscanner 4 kommende Lichtbündel 3 in den Wellenleiter 7 einzukoppeln.

Prinzipiell können alle diffraktiven Elemente 5 auch in den Wellenleiter 7 eingebracht sein. Die Anordnung der diffraktiven Elemente 5 spielt für den für die Vorrichtung benötigten Bauraum eine wesentliche Rolle, weshalb es vorteilhaft ist, die diffraktiven Elemente 5 in oder an dem Wellenleiter 7 anzubringen.

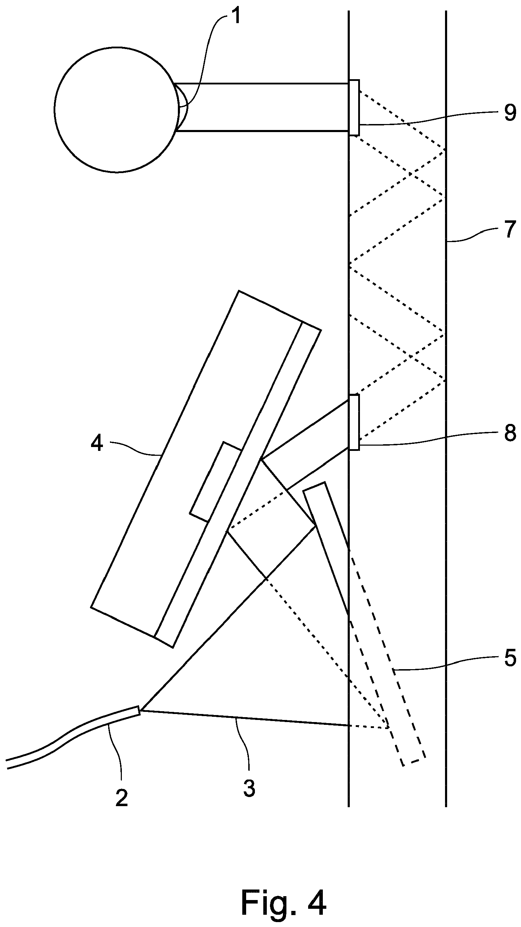

In **Fig. 4** ist eine fünfte Ausführung der Vorrichtung zur Erzeugung und Darstellung des Bildes auf dem Beobachtungsfeld 1 mit der Lichtquelle 2, dem diffraktiven Element 5 angebracht an dem Wellenleiter 7 und dem Mikroscanner 4 abgebildet. Der Strahlengang des Lichtbündels 3 ist hier bis zu einem Auge eines Nutzers schematisch dargestellt. Das diffraktive Element 5 ist an dem Wellenleiter 7 angebracht und ragt in den Wellenleiter 7. Die Lichtquelle 2 ist in dem dargestellten fünften Ausführungsbeispiel als fasergekoppelte Lichtquelle ausgeführt. Das von der Lichtquelle 2 emittierte Lichtbündel 3 wird von dem diffraktiven Element 5 kollimiert und in Richtung des Mikroscanners 4 abgelenkt. Von dem Mikroscanner 4 wird das Lichtbündel 3 in Richtung eines Einkoppelelements 8 abgelenkt und in den Wellenleiter 7 eingekoppelt. In dem Wellenleiter 7 propagiert das Lichtbündel 3 durch Totalreflexion an den Außenseiten des Wellenleiters 7 bis zu einem Auskoppelelement 9, an dem das Lichtbündel 3 aus dem Wellenleiter 7 ausgekoppelt wird und in Richtung eines Beobachtungsfeld 1, das das Auge eines Nutzers ist, propagiert.

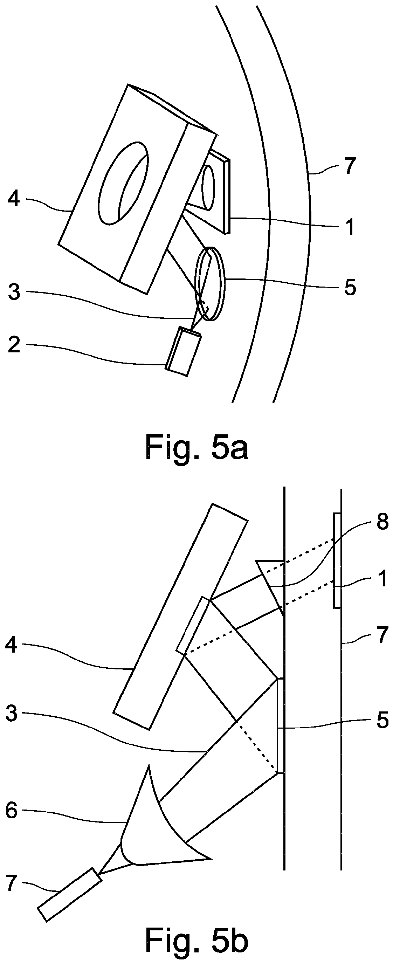

**Fig. 5a** zeigt eine sechste Ausführung der Vorrichtung zur Erzeugung und Darstellung eines Bildes auf dem Beobachtungsfeld 1. Die Lichtquelle 2 emittiert ein Lichtbündel 3 in Richtung des auf dem Wellenleiter 7 angebrachten diffraktiven Elements 5. Durch das diffraktive Element 5 wird das Lichtbündel 3 in Richtung des Mikroscanners 4 abgelenkt und kollimiert. Das kollimierte Lichtbündel 3 wird von dem Mikroscanner 4 in Richtung des Beobachtungsfelds 1 abgelenkt und über das Beobachtungsfeld 1 gescannt.

In **Fig. 5b** ist eine siebte Ausführung der Vorrichtung zur Erzeugung und Darstellung eines Bildes auf dem Beobachtungsfeld 1 dargestellt. Der Lichtquelle 2 im Strahlengang des Lichtbündels 3 nachgeordnet ist ein zusätzliches optisches Element 6 angeordnet, das dazu ausgelegt ist eine Divergenz des mindestens einen Lichtbündels 3 zu reduzieren. Das zusätzliche optische Element 6 ist in dem gezeigten siebten Ausführungsbeispiel als refraktives Element ausgeführt. Das optische zusätzliche optisches Element 6 kann aber auch als diffraktiv ausgeführt sein. Das Lichtbündel 3 trifft anschließend auf das diffraktive Element 5 und wird von diesem kollimiert und in Richtung des Mikroscanners 4 abgelenkt. Von dem Mikroscanner 4 wird das Lichtbündel 3 in Richtung des Einkoppelelements 8 abgelenkt. Das Einkoppelelement 8 ist so ausgelegt, dass das Lichtbündel 3 im Wesentlichen senkrecht auf eine Oberfläche des Einkoppelelements 8 trifft und in den Wellenleiter 7 eingekoppelt wird, wo es auf das Beobachtungsfeld 1 trifft.

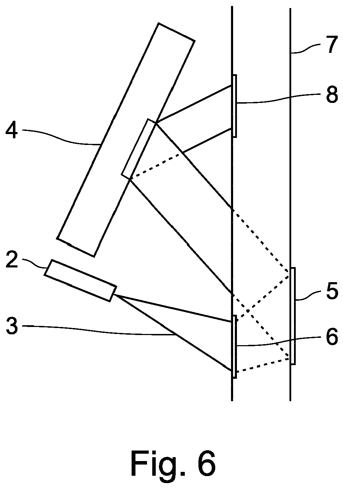

In **Fig. 6** ist eine achte Ausführung der Vorrichtung zur Erzeugung und Darstellung eines Bildes auf dem Beobachtungsfeld 1 gezeigt. Im Gegensatz zu der in Fig. 5b gezeigten siebten Ausführung ist das zusätzliche optische Element 6 hier als diffraktiv ausgelegt und auf eine Außenseite innerhalb des Wellenleiters 7 aufgebracht.

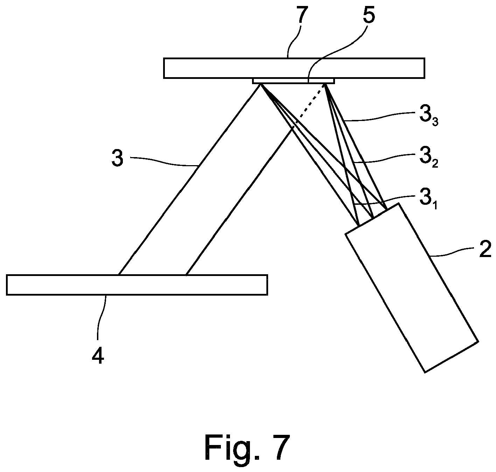

Eine neunte Ausführung der Vorrichtung zur Erzeugung und Darstellung eines Bildes auf dem Beobachtungsfeld 1 mit der Lichtquelle 2, dem diffraktiven Element 5 und dem Mikroscanner 4 sowie die Strahlengänge dreier Lichtbündel 3₁, 3₂, 3a sind in **Fig. 7** abgebildet. Die Lichtquelle 2 emittiert drei Lichtbündel 3₁, 3₂, 3₃ in Richtung des diffraktiven Elements 5. Die Lichtbündel 3₁, 3₂, 3₃ werden durch das diffraktive Element 5 in Richtung des Mikroscanners 4 abgelenkt, kollimiert und zu einem einzigen Lichtbündel 3 vereinigt.

In den Fig. 1a, 2, 3, 4, 5a, 5b sowie 6 ist im Sinne einer leichter nachvollziehbaren Darstellung jeweils nur einer von vielen möglichen Strahlengängen, die das Lichtbündel 3 nach der Ablenkung durch den Mikroscanner 4 nehmen kann, dargestellt.

### Bezugszeichenliste

- 1: Beobachtungsfeld
- 2: Lichtquelle
- 3: (vereinigtes) Lichtbündel
- 3₁: Lichtbündel
- 3₂: Lichtbündel
- 3₃: Lichtbündel
- 4: Mikroscanner
- 5: diffraktives Element
- 6: zusätzliches optisches Element
- 7: Wellenleiter
- 8: Einkoppelelement
- 9: Auskoppelelement
- 10: Deckglas

## Patentansprüche

1. Vorrichtung zur Erzeugung und Darstellung eines Bildes auf einem zur Einblendung von Informationen und Bildern vorgesehenen Beobachtungsfeld (1), umfassend:
- mindestens eine Lichtquelle (2) zum Aussenden mindestens eines divergenten Lichtbündels (3),
- einen Mikroscanner (4) zur variablen Ablenkung des mindestens einen Lichtbündels (3) in Richtung des Beobachtungsfelds (1),
- einen Wellenleiter (7), der in einem zwischen der mindestens einen Lichtquelle (2) und dem Mikroscanner (4) vorhandenen Strahlengang des mindestens einen Lichtbündels (3) angeordnet ist, und
- mindestens ein diffraktives Element (5) zur Kollimation des mindestens einen Lichtbündels (3), wobei
- der Mikroscanner (4) mindestens eine Drehachse für eine rotatorische Schwingungsbewegung zur Ablenkung des mindestens einen Lichtbündels (3) aufweist, und
- das mindestens eine diffraktive Element (5) auf oder in dem Wellenleiter (7) angebracht ist.

2. Vorrichtung nach Anspruch 1, wobei das mindestens eine diffraktive Element (5) als Gitter ausgebildet ist.

3. Vorrichtung nach einem der Ansprüche 1 bis 2, wobei das mindestens eine diffraktive Element (5) zur Formung eines Strahlquerschnitts des mindestens einen Lichtbündels (3) ausgelegt ist, um eine Elliptizität des mindestens einen Lichtbündels (3) zu reduzieren.

4. Vorrichtung nach einem der Ansprüche 1 bis 3, wobei das mindestens eine diffraktive Element (5) zur Beeinflussung von Astigmatismen des mindestens einen Lichtbündels (3) ausgelegt ist.

5. Vorrichtung nach einem der Ansprüche 1 bis 4, wobei dem mindestens einen diffraktiven Element (5) im Strahlengang des mindestens einen Lichtbündels (3) ein zusätzliches optisches Element (6) vorgeordnet ist, das dazu ausgelegt ist, eine Divergenz des mindestens einen Lichtbündels (3) zu reduzieren.

6. Vorrichtung nach einem der Ansprüche 1 bis 5, wobei die mindestens eine Lichtquelle (2) als Kantenemitter, Oberflächenemitter oder als fasergekoppelte Lichtquelle ausgebildet ist.

7. Vorrichtung nach einem der Ansprüche 1 bis 6, wobei die mindestens eine Lichtquelle (2) dazu ausgebildet ist, mehrere Lichtbündel (3ᵢ) mit paarweise voneinander verschiedenen spektralen Zusammensetzungen zu emittieren.

8. Vorrichtung nach einem der Ansprüche 1 bis 6, wobei die mindestens eine Lichtquelle (2) dazu ausgebildet ist, mehrere Lichtbündel (3ᵢ) mit derselben spektralen Zusammensetzung zu emittieren.

9. Vorrichtung nach Anspruch 7 oder 8, wobei zwischen der mindestens einen Lichtquelle (2) und dem Mikroscanner (4) ein diffraktives Element (5) angeordnet ist, das dazu ausgelegt ist, die Lichtbündel (3ᵢ), die unter paarweise verschiedenen Winkeln auf das diffraktive Element (5) fallen, zu einem einzigen Lichtbündel (3) vereinigen.

10. Vorrichtung nach einem der Ansprüche 1 bis 9, wobei der Mikroscanner (4) als mikro-elektro-mechanisches System ausgebildet und dazu ausgelegt ist, eine nichtlineare Lissajous-Projektion in das Beobachtungsfeld (1) zu bewirken.

11. Vorrichtung nach einem der Ansprüche 1 bis 10, wobei der Wellenleiter (7) ein Brillenglas einer Augmented-Reality-Brille ist.

12. Augmented-Reality-Brille, enthaltend eine Projektionsvorrichtung zur Erzeugung und Darstellung von Bildern nach einem der Ansprüche 1 bis 11.
